(19) Europäisches Patentamt
European Patent Office
Office européen des brevets

(11) EP 4 000 955 B1

(12) EUROPEAN PATENT SPECIFICATION

(45) Date of publication and mention of the grant of the patent:
**25.06.2025 Bulletin 2025/26**

(21) Application number: **21206558.5**

(22) Date of filing: **04.11.2021**

(51) International Patent Classification (IPC):
***B60C 1/00*** $^{(2006.01)}$ ***B60C 11/03*** $^{(2006.01)}$
***B60C 19/00*** $^{(2006.01)}$ ***B60C 11/04*** $^{(2006.01)}$
***B60C 11/00*** $^{(2006.01)}$ ***B60C 19/12*** $^{(2006.01)}$

(52) Cooperative Patent Classification (CPC):
**B60C 1/0016; B60C 11/0041; B60C 11/005; B60C 11/0309; B60C 11/033; B60C 11/042; B60C 19/002; B60C 19/122;** B60C 11/0306; B60C 2011/0025; B60C 2011/0344; B60C 2011/0353; B60C 2011/0355; B60C 2011/0358

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2020 JP 2020192424**

(43) Date of publication of application:
**25.05.2022 Bulletin 2022/21**

(73) Proprietor: **Sumitomo Rubber Industries, Ltd.**
**Kobe-shi, Hyogo-ken 651-0072 (JP)**

(72) Inventor: **FUJII, Daichi**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 0 715 974**
**EP-A1- 3 115 227**
**EP-A1- 3 181 376**
**EP-A1- 3 950 381**
**EP-A2- 0 105 822**
**WO-A1-2018/020103**
**JP-A- 2010 132 772**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 000 955 B1

## Description

TECHNICAL FIELD

The present invention relates to a tire.

BACKGROUND OF THE INVENTION

As a method of suppressing a vibration sound (noise) of a tire during running, for example, a method of forming a tread rubber of a pneumatic tire into a two-layer structure and using a foam rubber for a rubber layer inside the structure is known (JP H06-156016 A).
EP 0 715 974 A1 discloses a pneumatic tire comprising a tread that has at least two layers of rubber having different moduli, wherein the layer of rubber having the lower modulus is at the surface of the tread.
EP 0 105 822 A2 discloses a tire having a tread composed of a plurality of layers, each layer having different physical properties.
EP 3 115 227 A1 discloses a pneumatic tire to reduce noise while suppressing increase in rolling resistance, without affecting the formation of a carcass line.

SUMMARY OF THE INVENTION

In conventional tires, as a tread part is worn, rigidity of a land part of the tread increases, and an effect of suppressing a vibration noise also decreases, and therefore the noise tends to increase as the tires run.
An object of the present invention is to provide a tire in which deterioration of noise performance after abrasion is suppressed.
As a result of intensive studies, the present inventor has found that the above-described problems can be solved by laminating four or more rubber layers, each having a different complex elastic modulus on a tread part of a tire, and completed the present invention.
That is, the present invention relates to:

[1] A tire having a tread part comprising four or more rubber layers each having a different complex elastic modulus at 30°C measured under a condition of a temperature at 30°C, an initial strain of 10%, a dynamic strain of 1%, and a frequency of 10 Hz, wherein the tread part has two or more circumferential grooves extending continuously in a circumferential direction of the tire, a pair of shoulder land parts partitioned by the circumferential grooves, and a center land part located between the pair of shoulder land parts; characterized in that a groove area ratio in the shoulder land part is larger than a groove area ratio in the center land part,
[2] The tire of the above [1], wherein, in the four or more rubber layers, a difference in complex elastic modulus at 30°C between adjacent rubber layers is 1.0 MPa or more,
[3] The tire of the above [1], wherein, in the four or more rubber layers, the difference in complex elastic modulus at 30°C between adjacent rubber layers is 2.0 MPa or more,
[4] The tire of any one of the above [1] to [3], wherein a complex elastic modulus at 30°C of the four or more rubber layers decreases in order from a first layer of a tread surface toward inside in a tire radial direction,
[5] The tire of any one of the above [1] to [4], wherein a complex elastic modulus at 30°C of the first layer of the tread surface is 5.0 MPa or more,
[6] The tire of any one of the above [1] to [5], wherein, of the four or more rubber layers, a rubber layer located on the innermost side in the tire radial direction is composed of a rubber composition comprising a rubber component and a powdered rubber, and wherein a content of the powdered rubber based on 100 parts by mass of the rubber component is 10 to 80 parts by mass,
[7] The tire of any one of the above [1] to [6], wherein an inner peripheral surface of the tire of the tread part is provided with one or more low-density members selected from the group consisting of a sealant layer, a noise suppressing body, and a three-dimensional reticulate structure,
[8]
[9] The tire of any one of the above [1] to [8], wherein a length in a width direction of at least one of the land parts gradually increases from outside to inside in the tire radial direction,
[10] The tire of any one of the above the above [1] to [9], wherein, when a groove width on the tread surface of the circumferential groove located on the outermost side when mounted on a vehicle is $L_0$, and a groove width at 95% of the deepest part of the groove bottom of the circumferential groove located on the outermost side when mounted on the vehicle is $L_{95}$, $L_{95}/L_0$ is 0.20 to 0.80.

According to the present invention, a tire is provided in which deterioration of noise performance after abrasion is suppressed.

BRIEF DESCRIPTION OF THE DRAWINGS

FIG. 1 is a cross-sectional view of an example of a tire that is one embodiment of the present invention.
FIG. 2 is a schematic view of a grounding surface of a tire when a tread is pressed against a flat surface.
FIG. 3 is an enlarged cross-sectional view schematically showing a part of a tread of a tire according to one embodiment of the present invention.

DETAILED DESCRIPTION

The tire that is one embodiment of the present invention is a tire having a tread part comprising four or more rubber layers each having a different complex elastic modulus at 30°C measured as specified in the description, wherein the tread part has two or more circumferential grooves extending continuously in a circumferential direction of the tire, a pair of shoulder land parts partitioned by the circumferential grooves, and a center land part located between the pair of shoulder land parts, and wherein a groove area ratio in the shoulder land part is larger than a groove area ratio in the center land part.
Although it is not intended to be bound by theory, in the present invention, the following can be considered as a mechanism that may suppress deterioration of noise performance after tire abrasion.
Even when the first layer of the tread surface is worn, and a second layer is exposed, there will be one or more rubber layers having a different hardness at a temperature during running between a base material (the innermost layer of the tread, which is a fourth layer in the present invention or a rubber layer inside in the radial direction with respect to the fourth layer) of a land part block and a grounding surface, and energy of vibration will be gradually lost when transmitted between these rubber layers, and therefore it becomes possible to maintain noise performance of the tire even in the latter stage of running. Moreover, as abrasion progresses, a rubber layer interface in a direction perpendicular to the tread surface (the tire radial direction) is lost. However, it is considered that, at that time, the number of rubber layers, through which vibration transmitted to the rubber layer of the tread surface passes in transmitting the vibration to the adjacent block, increases, and therefore it becomes possible to suppress resonance between blocks, allowing for prevention of deterioration of noise performance due to running.
It is preferable that the four or more rubber layers are laminated adjacent to each other in order from the first rubber layer of the tread surface toward the inside in the tire radial direction.
The difference in complex elastic modulus at 30°C between adjacent rubber layers is preferably 1.0 MPa or more, more preferably 2.0 MPa or more. As a result, a difference in rigidity between adjacent rubber layers becomes large, and it is considered that a vibration energy easily becomes lost when the vibration propagates on the rubber layer interface.
It is preferable that the complex elastic modulus at 30°C of the four or more rubber layers decreases in order from the first layer of the tread surface toward the inside in the tire radial direction. As a result, the innermost layer of the tread turns into the softest state, and it is considered that an effect of absorbing a vibration energy in the innermost layer can be obtained, and an effect of suppressing vibration becomes easily maintained since the softest rubber layer remains until the latter stage of abrasion.
The complex elastic modulus at 30°C of the first layer of the tread surface is preferably 5.0 MPa or more.
In the tread part of the present invention, it is preferable that, of the four or more rubber layers, a rubber layer located on the innermost side in the tire radial direction is composed of a rubber composition comprising a rubber component and a powdered rubber, and a content of the powdered rubber based on 100 parts by mass of the rubber component is 10 to 80 parts by mass. It is considered that the powdered rubber forms an independent domain in the rubber layer, which makes it possible to have a minute interface in the rubber layer inside, and it is considered that the effect of absorbing a vibration energy easily becomes obtained.
In the tread part of the present invention, it is preferable that the inner peripheral surface of the tire of the tread part is provided with one or more low-density members selected from the group consisting of a sealant layer, a noise suppressing body, and a three-dimensional reticulate structure. By providing the inner peripheral surface of the tire with low-density members, when vibration is transmitted from the tread surface, these low-density members vibrate inside the tire, which makes it possible to cancel the vibration in the tread part, and it is considered that the effect is expected to be exhibited even in the latter stage of abrasion.
The groove area ratio in the shoulder land part is larger than the groove area ratio in the center land part.
It is preferable that the length in the width direction of at least one of the land parts gradually increases from outside to inside in the tire radial direction. Thereby, a plurality of rubber layers become easy to be uniformly formed on the side of the land part at the time of production of a tire, and thus it is considered that it becomes easy to suppress

deterioration of noise performance in the latter stage of abrasion.

When a groove width on the tread surface of the circumferential groove located on the outermost side when mounted on a vehicle is $L_0$, and a groove width at 95% of the deepest part of the groove bottom of the circumferential groove located on the outermost side when mounted on the vehicle is $L_{95}$, $L_{95}/L_0$ is preferably 0.20 to 0.70.

The tire comprising rubber layers which is one embodiment of the present invention will be described in detail below. However, the following descriptions are illustrative for explaining the present invention, and are not intended to limit the technical scope of the present invention to this description range only. Besides, in the present specification, a numerical range identified with "to" means to include the numerical values of both ends.

[Rubber composition for tread]

The tread part of the present invention is composed of four or more rubber layers each having a different complex elastic modulus at 30°C. All of the rubber compositions of each layer of the tread part can be produced by using raw materials which will be described below according to required complex elastic moduli at 30°C, which will be described in detail below.

<Rubber component>

The rubber composition according to the present invention preferably comprises at least one selected from the group consisting of an isoprene-based rubber, a styrene-butadiene rubber (SBR), and a butadiene rubber (BR) as rubber components. A rubber composition of rubber layers that are presupposed to come into contact with a road surface by running (at least the first layer to the third layer in the present invention) preferably comprises a SBR, more preferably comprises a SBR and a BR, further preferably comprises an isoprene-based rubber, a SBR, and a BR, as rubber components, and may be a rubber component consisting only of an isoprene-based rubber, a SBR, and a BR. Moreover, when the tire is a studless tire or a winter tire, it preferably comprises an isoprene-based rubber and a BR. On the other hand, a rubber composition of rubber layers that are not presupposed to come into contact with a road surface by running preferably comprises an isoprene-based rubber or a BR, more preferably comprises an isoprene-based rubber and a BR, as rubber components, and may be a rubber component consisting only of an isoprene-based rubber and a BR. Besides, the fourth layer of the present invention may be a rubber layer that is presupposed to come into contact with a road surface by running, or may be a rubber layer that is not presupposed to come into contact with a road surface by running, depending on use and structure of a tire.

(Isoprene-based rubber)

As an isoprene-based rubber, for example, those common in the tire industry can be used, such as an isoprene rubber (IR) and a natural rubber. Examples of the natural rubber includes a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in 100% by mass of the rubber component when compounded in the rubber composition of the rubber layers that are presupposed to come into contact with a road surface by running is preferably 50% by mass or less, more preferably 40% by mass or less, further preferably 30% by mass or less, particularly preferably 20% by mass or less, from the viewpoint of wet grip performance. Moreover, a lower limit value of the content can be, but not particularly limited to, for example, 1% by mass or more, 3% by mass or more, 5% by mass or more, or 10% by mass or more.

A content of the isoprene-based rubber in 100% by mass of the rubber component when compounded in the rubber composition of the rubber layers that are not presupposed to come into contact with a road surface by running is preferably 50% by mass or more, more preferably 60% by mass or more, further preferably 70% by mass or more, or may be 100% by mass.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among

them, a S-SBR and a modified SBR are preferable. Furthermore, hydrogenated ones of these SBRs (hydrogenated SBRs) and the like can also be used.

The SBRs listed above may be used alone or two or more thereof may be used in combination. As the SBRs listed above, for example, those commercially available from Sumitomo Chemical Co., Ltd., JSR Corporation, Asahi Kasei Corporation, Zeon Corporation, ZS Elastomer Co., Ltd., etc. can be used.

A styrene content of the SBR is preferably 10% by mass or more, more preferably 15% by mass or more, further preferably 20% by mass or more, from the viewpoints of wet grip performance and abrasion resistance. Moreover, it is preferably 60% by mass or less, more preferably 55% by mass or less, further preferably 50% by mass or less, from the viewpoints of temperature dependence of grip performance and blow resistance. Besides, in the present specification, the styrene content of the SBR is calculated by $^1$H-NMR measurement.

A vinyl content of the SBR is preferably 10 mol% or more, more preferably 15 mol% or more, further preferably 20 mol% or more, from the viewpoints of ensuring reactivity with silica, wet grip performance, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. Besides, in the present specification, the vinyl content (1,2-bond butadiene unit amount) of the SBR is measured by infrared absorption spectrometry.

A weight-average molecular weight (Mw) of the SBR is preferably 200,000 or more, more preferably 250,000 or more, from the viewpoint of wet grip performance. Moreover, the weight-average molecular weight is preferably 2,000,000 or less, more preferably 1,800,000 or less, further preferably 1,500,000 or less, from the viewpoint of cross-linking uniformity. Besides, in the present specification, the weight-average molecular weight of the SBR can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

A content of the SBR in 100% by mass of the rubber component when compounded in the rubber composition of the rubber layers that are presupposed to come into contact with a road surface by running is preferably 10% by mass or more, more preferably 20% by mass or more, further preferably 30% by mass or more, particularly preferably 40% by mass or more, from the viewpoint of wet grip performance. Moreover, an upper limit value of the content of the SBR in the rubber component can be, but not particularly limited to, for example, 70% by mass or less, 80% by mass or less, 90% by mass or less, or may be 100% by mass. Besides, in the rubber composition of the rubber layers that are not presupposed to come into contact with a road surface by running, the content of the SBR in the rubber component is not particularly limited.

(BR)

The BR is not particularly limited, and those common in the tire industry can be used such as, for example, a BR having a cis content of less than 50% by mass (a low cis BR), a BR having a cis content of 90% by mass or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

As a high cis BR, for example, those commercially available from Zeon Corporation, Ube Industries, Ltd., JSR Corporation, etc. can be used. When the high cis BR is compounded, low temperature characteristics and abrasion resistance can be improved. The cis content is preferably 95% by mass or more, more preferably 96% by mass or more, further preferably 97% by mass or more, particularly preferably 98% by mass or more. Besides, in the present specification, the cis content (cis-1,4-bond butadiene unit amount) is a value calculated by infrared absorption spectrometry.

As a modified BR, a modified butadiene rubber (a modified BR) modified at its terminal and/or main chain with a functional group comprising at least one element selected from the group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (a tin-modified BR), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

A content of the BR in 100% by mass of the rubber component when compounded in the rubber composition of the rubber layers that are presupposed to come into contact with a road surface by running is preferably 60% by mass or

less, more preferably 50% by mass or less, further preferably 45% by mass or less, particularly preferably 40% by mass or less, from the viewpoint of wet grip performance. Moreover, a lower limit value of the content can be, but not particularly limited to, for example, 1% by mass or more, 3% by mass or more, 5% by mass or more, 10% by mass or more, or 15% by mass or more.

A content of the BR in 100% by mass of the rubber component when compounded in the rubber composition of the rubber layers that are not presupposed to come into contact with a road surface by running is preferably 50% by mass or less, more preferably 40% by mass or less, further preferably 30% by mass or less. Moreover, a lower limit value of the content can be, but not particularly limited to, for example, 1% by mass or more, 3% by mass or more, 5% by mass or more, or 10% by mass or more.

(Other rubber components)

As the rubber components according to the present invention, rubber components other than the above-described isoprene-based rubbers, SBRs, and BRs may be compounded. As other rubber components, cross-linkable rubber components commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

< Filler>

For the rubber composition according to the present invention, a filler comprising carbon black and/or silica is appropriately used. The rubber composition of the rubber layer that are presupposed to come into contact with a road surface by running preferably comprises silica as a filler, more preferably comprises carbon black and silica. The rubber composition of the rubber layer that are not presupposed to come into contact with a road surface by running preferably comprises carbon black as a filler.

(Carbon black)

Carbon black is not particularly limited, and, for example, those commonly used in the tire industry such as GPF, FEF, HAF, ISAF, and SAF can be used. These carbon black may be used alone or two or more thereof may be used in combination.

A nitrogen adsorption specific surface area ($N_2SA$) of carbon black is preferably 10 $m^2/g$ or more, more preferably 30 $m^2/g$ or more, further preferably 50 $m^2/g$ or more, from the viewpoint of reinforcing property. Moreover, it is preferably 200 $m^2/g$ or less, more preferably 150 $m^2/g$ or less, further preferably 100 $m^2/g$ or less, further preferably 80 $m^2/g$ or less, particularly preferably 50 $m^2/g$ or less, from the viewpoints of fuel efficiency and processability. Besides, the $N_2SA$ of carbon black is a value measured according to JIS K 6217-2: "Carbon black for rubber industry-Fundamental characteristics-Part 2: Determination of specific surface area-Nitrogen adsorption methods-Single-point procedures".

When the rubber composition of the rubber layers that are presupposed to come into contact with a road surface by running comprises the carbon black, the content thereof is, from the viewpoints of abrasion resistance and wet grip performance, preferably 1 part by mass or more, more preferably 3 parts by mass or more, further preferably 5 parts by mass or more based on 100 parts by mass of the rubber component. Moreover, it is preferably 50 parts by mass or less, more preferably 35 parts by mass or less, further preferably 20 parts by mass or less, particularly preferably 10 parts by mass or less, from the viewpoint of fuel efficiency. When the rubber composition of the rubber layers that are not presupposed to come into contact with a road surface by running comprises carbon black, the content thereof is preferably 20 to 100 parts by mass, more preferably 25 to 80 parts by mass, further preferably 30 to 60 parts by mass based on 100 parts by mass of the rubber component.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silica may be used alone, or two or more thereof may be used in combination.

A nitrogen adsorption specific surface area ($N_2SA$) of silica is preferably 140 $m^2/g$ or more, more preferably 170 $m^2/g$ or more, further preferably 200 $m^2/g$ or more, from the viewpoints of fuel efficiency and abrasion resistance.

Moreover, it is preferably 350 $m^2/g$ or less, more preferably 300 $m^2/g$ or less, further preferably 250 $m^2/g$ or less, from the viewpoints of fuel efficiency and processability. Besides, the $N_2SA$ of silica in the present specification is a value measured by a BET method according to ASTM D3037-93.

When the rubber composition of the rubber layers that are presupposed to come into contact with a road surface by running comprises the silica, the content thereof is, from the viewpoint of wet grip performance, preferably 40 parts by mass or more, more preferably 50 parts by mass or more, further preferably 60 parts by mass or more, particularly preferably 70 parts by mass or more based on 100 parts by mass of the rubber component. Moreover, it is preferably 130 parts by mass or less, more preferably 120 parts by mass or less, further preferably 110 parts by mass or less, from the viewpoint of abrasion resistance. Besides, in the rubber composition of the rubber layers that are not presupposed to come into contact with a road surface by running, the content of silica based on 100 parts by mass of the rubber component is not particularly limited.

A total content of silica and carbon black based on 100 parts by mass of the rubber component is preferably 40 parts by mass or more, more preferably 50 parts by mass or more, further preferably 60 parts by mass or more, particularly preferably 70 parts by mass or more, from the viewpoint of abrasion resistance. Moreover, it is preferably 160 parts by mass or less, more preferably 140 parts by mass or less, further preferably 120 parts by mass or less, from the viewpoints of fuel efficiency and elongation at break.

(Silane coupling agent)

Silica is preferably used in combination with a silane coupling agent. The silane coupling agent is not particularly limited, and a silane coupling agent conventionally used in combination with silica in the tire industry can be used, examples of which include, for example, mercapto-based silane coupling agents described below; sulfide-based silane coupling agents such as bis(3-triethoxysilylpropyl)disulfide and bis(3-triethoxysilylpropyl)tetrasulfide; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxy, and the like. Among them, sulfide-based silane coupling agents and/or mercapto-based silane coupling agents are preferable, and mercapto-based silane coupling agents are more preferable. These silane coupling agents may be used alone, or two or more thereof may be used in combination.

It is preferable that the mercapto-based silane coupling agent is a compound represented by the following formula (1) and/or a compound comprising a bond unit A represented by the following formula (2) and a bond unit B represented by the following formula (3).

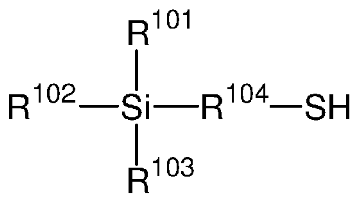

(1)

(wherein, $R^{101}$, $R^{102}$, and $R^{103}$ each independently represents a group represented by alkyl having 1 to 12 carbon atoms, alkoxy having 1 to 12 carbon atoms, or $-O-(R^{111}-O)_z-R^{112}$ ($R^{111}$s of z each independently represents a divalent hydrocarbon group having 1 to 30 carbon atoms; $R^{112}$ represents alkyl having 1 to 30 carbon atoms, alkenyl having 2 to 30 carbon atoms, aryl having 6 to 30 carbon atoms, or aralkyl having 7 to 30 carbon atoms; and z represents an integer of 1 to 30); and $R^{104}$ represents an alkylene having 1 to 6 carbon atoms.)

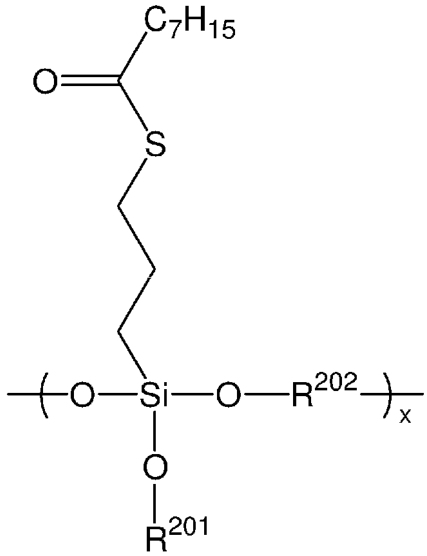

(2)

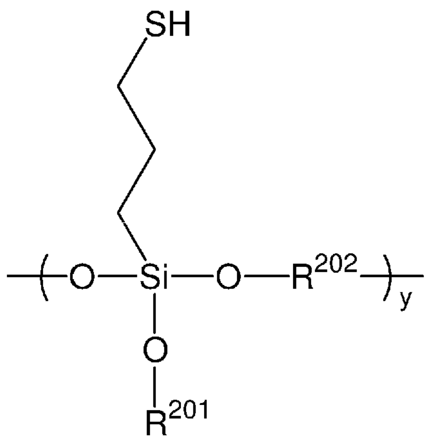

(3)

(wherein, x represents an integer of 0 or more; y represents an integer of 1 or more; $R^{201}$ represents alkyl having 1 to 30 carbon atoms, alkenyl having 2 to 30 carbon atoms, or alkynyl having 2 to 30 carbon atoms, which may be substituted with a hydrogen atom, a halogen atom, hydroxyl, or carboxyl; and $R^{202}$ represents alkylene having 1 to 30 carbon atoms, alkenylene having 2 to 30 carbon atoms, or alkynylene having 2 to 30 carbon atoms; where $R^{201}$ and $R^{202}$ may together form a ring structure.)

Examples of the compound represented by the formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following formula (4) (Si363 manufactured by Evonik Degussa GmbH), and the like, and the compound represented by the following formula (4) can be appropriately used. They may be used alone, or two or more thereof may be used in combination.

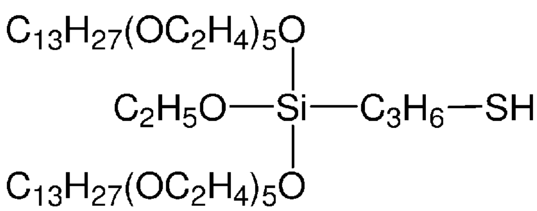

(4)

Examples of the compound comprising the bond unit A represented by the formula (2) and the bond unit B represented by the formula (3) include, for example, those manufactured and sold by Momentive Performance Materials, etc. They may be used alone, or two or more thereof may be used in combination.

When the rubber composition comprises the silane coupling agent, the total content thereof is, from the viewpoint of enhancing dispersibility of silica, preferably 0.5 parts by mass or more, more preferably 1.0 part by mass or more, further

preferably 2.0 parts by mass or more, particularly preferably 4.0 parts by mass or more based on 100 parts by mass of the rubber component. Moreover, it is preferably 20 parts by mass or less, more preferably 12 parts by mass or less, further preferably 10 parts by mass or less, particularly preferably 9.0 parts by mass or less, from the viewpoint of preventing deterioration of abrasion resistance.

A content of the silane coupling agent based on 100 parts by mass of silica (a total amount of a plurality of silane coupling agents when used in combination) is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

As a filler, other fillers may be used in addition to carbon black and silica. Such filler is not particularly limited, and any filler commonly used in this field such as, for example, aluminum hydroxide, alumina (aluminum oxide), calcium carbonate, magnesium sulfate, talc, and clay can be used. These fillers may be used alone, or two or more thereof may be used in combination.

<Softening agent>

The rubber composition according to the present invention preferably comprises a softening agent. Examples of the softening agent include, for example, a resin component, oil, a liquid rubber, and the like.

The resin component is not particularly limited, examples of which include a petroleum resin, a terpene-based resin, a rosin-based resin, a phenol-based resin, and the like, which are commonly used in the tire industry. These resin components may be used alone, or two or more thereof may be used in combination.

When the rubber composition comprises the resin component, the content thereof is preferably 1 part by mass or more, more preferably 3 parts by mass or more, further preferably 5 parts by mass or more based on 100 parts by mass of the rubber component. Moreover, the content of the resin component is preferably 60 parts by mass or less, more preferably 50 parts by mass or less, further preferably 40 parts by mass or less, particularly preferably 30 parts by mass or less.

Examples of oil include, for example, process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic (PCA) compound can also be used. Examples of the low PCA content process oil include a mild extraction solution (MES), a treated distillate aromatic extract (TDAE), a heavy naphthenic oil, and the like.

When the rubber composition comprises the oil, the content thereof is, from the viewpoint of processability, preferably 2 parts by mass or more, more preferably 5 parts by mass or more, further preferably 10 parts by mass or more, particularly preferably 15 parts by mass or more based on 100 parts by mass of the rubber component. Moreover, it is preferably 120 parts by mass or less, more preferably 80 parts by mass or less, further preferably 50 parts by mass or less, from the viewpoint of abrasion resistance. Besides, in the present specification, the content of oil also includes an amount of oil contained in an oil-extended rubber.

The liquid rubber is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone, or two or more thereof may be used in combination.

When the rubber composition comprises the liquid rubber, the content thereof is preferably 1 part by mass or more, more preferably 2 parts by mass or more, further preferably 3 parts by mass or more, particularly preferably 5 parts by mass or more. Moreover, the content of the liquid rubber is preferably 50 parts by mass or less, more preferably 40 parts by mass or less, further preferably 20 parts by mass or less.

A content of the softening agent when compounded in the rubber compositions of the rubber layers that are presupposed to come into contact with a road surface by running based on 100 parts by mass of the rubber component (a total amount of all the softening agents when a plurality of softening agents are used in combination) is preferably 2 parts by mass or more, more preferably 5 parts by mass or more, further preferably 10 parts by mass or more, particularly preferably 15 parts by mass or more. Moreover, the content of the softening agent is preferably 120 parts by mass or less, more preferably 100 parts by mass or less, further preferably 90 parts by mass or less, particularly preferably 80 parts by mass or less.

A content of the softening agent when compounded in the rubber compositions of the rubber layers that are not presupposed to come into contact with a road surface by running based on 100 parts by mass of the rubber component (a total amount of all the softening agents when a plurality of softening agents are used in combination) is preferably 30 parts by mass or less, more preferably 25 parts by mass or less, further preferably 20 parts by mass or less, particularly preferably 15 parts by mass or less.

(Other compounding agents)

The rubber composition according to the present invention can appropriately comprise compounding agents conventionally and generally used in the tire industry, for example, wax, processing aid, stearic acid, zinc oxide, an antioxidant, a vulcanizing agent, a vulcanization accelerator, and the like, in addition to the above-described components.
When the rubber composition comprises wax, the content thereof is, from the viewpoint of weather resistance of a rubber, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of preventing whitening of a tire due to bloom.
Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.
When the rubber composition comprises the processing aid, the content thereof is, from the viewpoint of exhibiting an effect of improving processability, preferably 0.5 parts by mass or more, more preferably 1 part by mass or more based on 100 parts by mass of the rubber component. Moreover, it is preferably 10 parts by mass or less, more preferably 8 parts by mass or less, from the viewpoints of abrasion resistance and breaking strength.
Examples of the antioxidant include, but not particularly limited to, for example, amine-based, quinoline-based, quinone-based, phenol-based, and imidazole-based compounds, and antioxidants such as a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.
When the rubber composition comprises the antioxidant, the content thereof is, from the viewpoint of ozone crack resistance of a rubber, preferably 0.5 parts by mass or more, more preferably 1 part by mass or more based on 100 parts by mass of the rubber component. Moreover, it is preferably 10 parts by mass or less, more preferably 5 parts by mass or less, from the viewpoints of abrasion resistance and wet grip performance.
When the rubber composition comprises stearic acid, the content thereof is, from the viewpoint of processability, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of vulcanization rate.
When the rubber composition comprises zinc oxide, the content thereof is, from the viewpoint of processability, preferably 0.5 parts by mass or more, more preferably 1 part by mass or more based on 100 parts by mass of the rubber component. Moreover, it is preferably 10 parts by mass or less, more preferably 5 parts by mass or less, from the viewpoint of abrasion resistance.
Sulfur is appropriately used as a vulcanizing agent. As sulfur, powdery sulfur, oil processing sulfur, precipitated sulfur, colloidal sulfur, insoluble sulfur, highly dispersible sulfur, and the like can be used.
When the rubber composition comprises the sulfur as a vulcanizing agent, the content thereof is, from the viewpoint of securing a sufficient vulcanization reaction, preferably 0.1 parts by mass or more, more preferably 0.3 parts by mass or more, further preferably 0.5 parts by mass or more based on 100 parts by mass of the rubber component. Moreover, it is preferably 5.0 parts by mass or less, more preferably 4.0 parts by mass or less, further preferably 3.0 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.
Examples of vulcanizing agents other than sulfur include, for example, alkylphenol/sulfur chloride condensate, 1,6-hexamethylene-sodium dithiosulfate/ dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.
Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, one or more vulcanization accelerators selected from the group consisting of sulfenamide-based, guanidine-based, and thiazole-based vulcanization accelerators are preferable, and sulfenamide-based vulcanization accelerators are more preferable.
Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

When the rubber composition comprises the vulcanization accelerator, the content thereof is preferably 1.0 part by mass or more, more preferably 2.0 parts by mass or more, further preferably 2.5 parts by mass or more based on 100 parts by mass of the rubber component. Moreover, the content is preferably 8.0 parts by mass or less, more preferably 7.0 parts by mass or less, further preferably 6.0 parts by mass or less. When the content of the vulcanization accelerator is within the above-described ranges, breaking strength and elongation tend to be secured.

<Powdered rubber>

The rubber composition of the rubber layer located on the innermost side in the tire radial direction, of the four or more rubber layers, preferably comprises a powdered rubber. The powdered rubber is obtained by pulverizing a vulcanized rubber.

Examples of the rubber component of the powdered rubber include, for example, diene-based rubbers such as NR, IR, SBR, BR, NBR, EPDM, CR, and IIR. These diene-based rubbers may be used alone, or two or more thereof may be used in combination.

The powdered rubber may comprise the above-described fillers, and compounding agents such as stearic acid, zinc oxide, an antioxidant, a vulcanizing agent, and a vulcanization accelerator, in addition to the above-described rubber components.

The above-described vulcanized rubber is obtained by kneading a rubber component and, if necessary, a filler and a compounding agent with, for example, a Banbury mixer, kneading a cross-linking agent and a vulcanization accelerator for the obtained kneaded product with an open roll, and then vulcanizing them.

Examples of the method of pulverizing a vulcanized rubber include a freezing and pulverizing method using a liquid nitrogen, a stone mill type pulverizing method, a pulverizing method using a roll or a mixer, a pulverizing method using an extruder, and the like. From the reason that a particle size can be reduced, it is preferable to perform a freezing and pulverizing method after pulverization with a cutter mill.

An average particle size of the powdered rubber is preferably 20 μm or more, more preferably 50 μm or more, further preferably 100 μm or more, from the viewpoints of riding comfort and noise performance. Moreover, the average particle size of the powdered rubber is preferably 1000 μm or less, more preferably 800 μm or less, further preferably 600 μm or less, from the viewpoint of processability. Besides, the average particle size of the powdered rubber is measured by an electron microscope, a laser type particle size analyzer, a sieve method using a mesh, or the like.

When the rubber composition comprises the powdered rubber, the content thereof is preferably 1 part by mass or more, more preferably 3 parts by mass or more, further preferably 5 parts by mass or more, particularly preferably 7 parts by mass or more based on 100 parts by mass of the rubber component. Moreover, the content is preferably 80 parts by mass or less, more preferably 70 parts by mass or less, further preferably 60 parts by mass or less, particularly preferably 50 parts by mass or less. When the content of the powdered rubber is within the above-described ranges, noise performance tends to be further improved.

The rubber composition according to the present invention can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

Examples of a kneading condition include, but not particularly limited to, for example, in the base kneading step, a method of kneading at a discharge temperature from 150 to 170°C for 3 to 10 minutes, and in the final kneading step, a method of kneading at 50 to 110°C for 1 to 5 minutes. Examples of a vulcanization condition include, but not particularly limited to, for example, a method of vulcanizing at 150 to 200°C for 5 to 30 minutes.

[Tire]

Hereinafter, the tire according to one embodiment of the present invention will be described with reference to the

drawings. Besides, embodiments shown below are merely examples, and the tires of the present invention is not limited to the following embodiments.

FIG. 1 is a cross-sectional view of a tire in a plane passing through a rotation axis of the tire, showing only the right side of the tire divided by a center line CL of the tire. The tire of FIG. 1 comprises a tread part 1, a sidewall 2, a bead part 3, a carcass 4, a belt 5, and a band 6. The tread part 1 is composed of four or more rubber layers including a first layer of a tread surface. The bead part 3 comprises a bead core 31. The carcass 4 may comprise a carcass cord (not shown). The belt 5 may comprise a belt cord (not shown). The band 6 consists of an edge band 61 that covers only an edge part of the belt 5 and a full band 62 that covers the entire area of the belt 5. Both the edge band 61 and the full band 62 may comprise a band cord (not shown). Besides, each rubber layer in the tread part 1 is not shown.

FIG. 2 is a developed view of the tread part 1. On the tread part 1, a tread pattern, in which a direction of mounting onto a vehicle is specified, is formed. The tread pattern of the tread part 1 is formed in an asymmetrical shape with respect to a tire equator C.

The tread part 1 has an outer tread end To and an inner tread end Ti. The outer tread end To is located on the outside of the vehicle (on the right side in FIG. 2) when mounted on the vehicle. The inner tread end Ti is located on the inside of the vehicle (on the left side in FIG. 2) when mounted on the vehicle.

Each of the tread ends To and Ti is in a grounding position on the outermost side in a tire width direction W (the left-right direction in FIG. 2, hereinafter simply referred to as a width direction W) when a normal load is applied to a tire in a normal state and the tire grounds a flat surface at a camber angle of 0 degree. The normal state is a state where the tire is rim-assembled on a normal rim and a normal internal pressure is filled, and no load is applied. In the present specification, a dimension of each part of a tire is a value measured in the above-described normal state, unless otherwise specified.

A "normal rim" is a rim defined for each tire in a standard system including standards, on which the tire is based, by the standard, i.e., a "standard rim" in JATMA, "Design Rim" in TRA, or "Measuring Rim" in ETRTO.

A "normal internal pressure" is an air pressure defined for each tire in the standard system including standards on, which the tire is based, by each standard, i.e., a "maximum air pressure" in JATMA, a maximum value described in Table "TIRE LOAD LIMITS AT VARIOUS COLD INFLATION PRESSURES" in TRA, or "INFLATION PRESSURE" in ETRTO.

A "normal load" is a load defined for each tire in the standard system including standards on, which the tire is based, by each standard, i.e., a "maximum load capacity" in JATMA, a maximum value described in Table "TIRE LOAD LIMITS AT VARIOUS COLD INFLATION PRESSURES" in TRA, or "LOAD CAPACITY" in ETRTO.

The tread part 1 has a plurality of circumferential grooves 11, 12, 13 extending continuously in a circumferential direction C. In FIG. 2, three circumferential grooves 11, 12, 13 are provided. However, the number of circumferential grooves is not particularly limited, and may be, for example, 2 to 5. Moreover, in the present invention, although the circumferential grooves 11, 12, 13 extend linearly along the circumferential direction C, they are not limited to such an embodiment, and may extend in, for example, a wavy shape, a sinusoidal shape, a zigzag shape, or the like along the circumferential direction C.

In the present invention, the "shoulder land part" refers to a pair of land parts formed between a circumferential groove located on the outermost side in a width direction W from a tire equator C and each tread end To, Ti. In FIG. 1, an outer shoulder land part 16 formed between the circumferential groove 12 located on the outermost side when mounted on a vehicle and the outer tread end To and an inner shoulder land part 17 formed between the circumferential groove 11 located on the innermost when mounted on the vehicle and the inner tread end Ti are provided respectively.

In the present invention, the "center land part" refers to all land parts sandwiched between the pair of shoulder land parts. In FIG. 1, an outer center land part 18 formed between the circumferential groove 13 provided along the tire equator C and the circumferential groove 12 located on the outermost side when mounted on the vehicle and an inner center land part 19 formed between the circumferential groove 13 provided along the tire equator C and the circumferential groove 11 located on the innermost side when mounted on the vehicle are provided respectively. However, the number of the center land parts is not particularly limited, and may be, for example, 1 to 5.

The shoulder land parts 16, 17 and the center land parts 18, 19 of the present invention are provided with lateral grooves and/or sipes that cross the land part. In FIG. 2, the shoulder land parts 16, 17 are provided with a plurality of shoulder lateral grooves 21 having a terminal end opened to the circumferential grooves 11, 12 and a plurality of shoulder sipes 22 having one end opened to the circumferential grooves 11, 12, and the center land parts 18, 19 are provided with a plurality of center sipes 23 having one end opened to the circumferential grooves 11, 13.

Besides, in the present specification, a "groove" including the circumferential groove and the lateral groove refers to a recess having a width at least larger than 2.0 mm. On the other hand, in the present specification, a "sipe" refers to a narrow notch having a width of 2.0 mm or less, preferably 0.5 to 2.0 mm.

In the present invention, a groove area ratio in a shoulder land part refers to a total area of lateral grooves and/or sipes that cross the land part with respect to a total area of shoulder land parts. A groove area ratio in a center land part refers to a total area of lateral grooves and/or sipes that cross the center land part with respect to a total area of center land parts.

The groove area ratio in the shoulder land part is larger than the groove area ratio in the center land part from the

viewpoint of noise performance. The groove area ratio in the shoulder land part is preferably 15 to 50%, more preferably 20 to 45%, further preferably 25 to 40%. The groove area ratio in the center land part is preferably 10 to 45%, more preferably 15 to 40%, further preferably 20 to 35%.

In the present specification, the total area of the shoulder land parts, the total area of the center land parts, and the total area of the lateral grooves and/or sipes that cross these land parts are calculated from a grounding shape when a normal load is applied to press a tread against a flat surface in a normal state. The grounding shape can be obtained by mounting a tire on a normal rim and holding a normal internal pressure, and then applying an ink to, for example, the tread part 1, applying a normal load to press the tread part 1 vertically against cardboard or the like (camper angle at 0°) and transferring the ink applied to the tread part 1. Moreover, from the obtained grounding shape, a sum of areas of the shoulder land parts in a state where all the lateral grooves and/or sipes that cross the shoulder land parts are filled is defined as a total area of the shoulder land parts, and a sum of areas of the center land parts in a state where all the lateral grooves and/or sipes that cross the center land parts are filled is defined as a total area of the center land parts.

The tread part 1 of the present invention comprises at least a first layer of a tread surface, a second layer adjacent to inside in a radial direction of the first layer, a third layer adjacent to inside in a radial direction of the second layer, and a fourth layer adjacent to inside in a radial direction of the third layer. The first layer typically corresponds to a cap tread. Moreover, as long as the object of the present invention is achieved, one or more rubber layers may be further provided between the fourth layer and a belt layer.

In the present invention, it is preferable that a width direction length of at least one land part of shoulder land parts and center land parts existing in the tread part 1 gradually increases from outside to inside in the tire radial direction. Thereby, a plurality of rubber layers become easy to be uniformly formed on the side of the land part at the time of production of a tire, and thus it is considered that it becomes easy to suppress deterioration of noise performance in the latter stage of abrasion. Besides, a groove wall 7 of the circumferential groove of the present invention extends linearly from outside to inside in the tire radial direction, though the present invention is not limited to such an embodiment, and the groove wall may extend in, for example, a curved shape or a stepped shape.

A ratio of a groove width at 95% of the deepest part of the groove bottom of the circumferential groove 12 ($L_{95}$) to a groove width $L_0$ on the tread surface of the circumferential groove 12 located on the outermost side when mounted on a vehicle ($L_0$) ($L_{95}/L_0$) is preferably 0.20 or more, more preferably 0.25 or more, further preferably 0.30 or more, particularly preferably 0.35 or more, from the viewpoint of effects of the present invention. Moreover, $L_{95}/L_0$ is preferably 0.80 or less, more preferably 0.70 or less, further preferably 0.65 or less, particularly preferably 0.60 or less. Besides, each rubber layer is not shown in FIG. 3.

<Low-density member>

The tire of the present invention can be provided with a low-density member on the inner peripheral surface of the tire of the tread part. The low-density member is not particularly limited as long as it has an effect of canceling vibration transmitted to the inner peripheral surface of the tire by resonance. Examples of such low-density member include, for example, a sealant layer used for preventing a puncture, a noise suppressing body, a three-dimensional reticulate structure, and the like.

The low-density member can exhibit its effect by being arranging on the inner peripheral surface of the tire of the tread part. A thickness in a tire radial direction and a width in a tire rotation axis direction of the low-density member, or a volume or cross-sectional area thereof, and other properties may differ depending on a type of low-density member and the like, though a person skilled in the art can determine them as appropriate.

The low-density member may be used alone, or two or more thereof may be used in combination. Examples of the combination use include, but not limited to, for example, first installing a sealant layer on the inner peripheral surface of the tire of the tread part, and then further installing a noise suppressing body, a three-dimensional reticulate structure, or the like on the sealant layer.

(Sealant layer)

As a sealant layer, one commonly used for the inner peripheral surface of the tire of the tread part can be appropriately used for preventing a puncture. Specific examples of such sealant layer include, for example, those described in JP 2020-23152 A. A thickness of the sealant layer is usually preferably 1 to 10 mm. A width of the sealant layer is usually preferably 85 to 115%, more preferably 95 to 105% of the maximum width of the belt layer.

(Noise suppressing body)

As a noise suppressing body, any one that can exhibit a noise suppressing effect in a tire lumen can be appropriately used. Specific examples of such noise suppressing body include, for example, those described in JP

2019-142503 A. The noise suppressing body is composed of, for example, a porous sponge material. The sponge material is a sponge-like porous structure, for example, a so-called sponge itself having open cells in which a rubber or a synthetic resin is foamed, as well as a web-like structure in which animal fibers, plant fibers, or synthetic fibers, etc. are entwined to be integrally coupled. Moreover, the "porous structure" includes a structure having open cells as well as closed cells. Examples of the noise suppressing body include an open-cell sponge material made of polyurethane. Examples of the sponge material include, for example, a synthetic resin sponge such as an ether-based polyurethane sponge, an ester-based polyurethane sponge, and a polyethylene sponge, and a rubber sponge such as a chloroprene rubber sponge (CR sponge), an ethylene propylene rubber sponge (EDPM sponge), and a nitrile rubber sponge (NBR sponge) can be appropriately used, and in particular, a polyurethane-based or polyethylene-based sponge including the ether-based polyurethane sponge is preferable from the viewpoints of noise suppressing property, light weight property, foaming adjustability, durability, and the like.

A noise suppressing body 9 has a long strip shape having a bottom surface fixed to the lumen surface of the tread part, and extends in a tire circumferential direction. At this time, the outer end parts in the circumferential direction may be butted against each other to form a substantially annular shape and may be also separated from each other in the circumferential direction. The noise suppressing body 9 has substantially the same cross-sectional shape at each position in the circumferential direction except for the outer end parts. This cross-sectional shape is preferably flat and oblong with a height smaller than a width in a tire axial direction in order to prevent the tire from tipping over and deforming during running. In particular, if a concave groove 7 extending continuously in the circumferential direction is provided on the inner surface side in the radial direction, the surface area of the noise suppressing body can be increased to absorb more resonance energy, and heat dissipation can be enhanced to suppress a temperature rise of the sponge material.

A glass transition temperature (Tg) of the noise suppressing body is preferably -55°C to -45°C from the viewpoint of maintaining good durability and flexibility. If the flexibility of the noise suppressing body is maintained at a low temperature, the noise suppressing body effectively converts vibration energy of the air into heat energy, for example, even when running in cold weather, sufficiently reducing the running noise. In the present specification, Tg is a value measured according to ASTM D 6604 (published on 2013) using a differential scanning calorimeter SC Q2000 manufactured by TA Instruments.

A density of the noise suppressing body is preferably $1.0 \times 10^{-2}$ g/cm$^3$ to $4.0 \times 10^{-2}$ g/cm$^3$ from the viewpoint of reducing the running noise around 250 Hz without increasing the weight of the tire.

A volume of the noise suppressing body is preferably 0.4 to 30% of a total volume of tire lumen from the viewpoints of sufficient conversion of vibration energy of the air, etc. The volume of the noise suppressing body is an apparent total volume of the noise suppressing body and means a volume determined from the outer shape including air bubbles inside. In the present specification, a total volume V of tire lumen shall be approximately calculated by the following equation in a normal state with no load where the pneumatic tire is rim-assembled on a normal rim and a normal internal pressure is filled.

$$V = A \times \{(Di-Dr) / 2 + Dr\} \times \pi$$

wherein, "A" is a cross-sectional area of the tire lumen obtained by CT scanning a tire/rim assembly in the normal state, "Di" is the maximum outer diameter of the tire lumen surface in the normal state, "Dr" is a rim diameter, and "$\pi$" is a circular constant.

A tensile strength of the noise suppressing body is preferably 70 to 115 kPa from the viewpoints of durability of the noise suppressing body, etc.

(Three-dimensional reticulate structure)

As a three-dimensional reticulate structure, in general, any one that acts as a noise absorbing material can be appropriately used. Specific examples of such noise absorbing material include, for example, those described in JP 2018-90131 A. More specifically, the three-dimensional reticulate structure is formed by irregularly entwining a plurality of wires obtained by melting a resin, and welding the entwined parts.

The three-dimensional reticulate structure is preferably fixed to the tire lumen. A method of fixing the three-dimensional reticulate structure to the tire lumen is not particularly limited, and for example, the three-dimensional reticulate structure may be adhered to the inner surface of the tire with an adhesive or the like, but it can also be fixed by a sealant material of the above-described sealant layer, which is preferable.

A thickness of the three-dimensional reticulate structure is, but not particularly limited to, preferably 1.0 to 150 mm, more preferably 30 to 120 mm. A width of the three-dimensional reticulate structure is, but not particularly limited to, preferably 50 to 95%, more preferably 60 to 90% of a width of the above-described sealant layer, because the effect can be obtained more appropriately.

A cross-sectional area ratio of the three-dimensional reticulate structure (that is, (cross-sectional area of three-dimensional reticulate structure / cross-sectional area of tire lumen) × 100) is preferably 2 to 90%, more preferably 5 to 70%, further preferably 20 to 70%, from the viewpoint of an efficient noise absorption performance. Here, in order to change the cross-sectional area ratio, for example, the width and thickness of the three-dimensional reticulate structure may be changed. The cross-sectional area of the three-dimensional reticulate structure is an apparent cross-sectional area of the three-dimensional reticulate structure, and refers to a cross-sectional area determined from the outer shape of the three-dimensional reticulate structure including an internal cavity. The cross-sectional area of the three-dimensional reticulate structure is calculated by dividing a volume of the three-dimensional reticulate structure by an average thickness of the three-dimensional reticulate structure (thickness in the tire radial direction). Here, the volume of the three-dimensional reticulate structure is an apparent total volume of the three-dimensional reticulate structure, and refers to a volume determined from the outer shape of the three-dimensional reticulate structure including the internal cavity. Moreover, the average thickness of the three-dimensional reticulate structure also refers to an average thickness determined from the outer shape of the three-dimensional reticulate structure including the internal cavity. Additionally, in the present specification, the cross-sectional area of the tire lumen is calculated by dividing a total area of the tire lumen by a height of the tire lumen in the tire radial direction.

An apparent density of the three-dimensional reticulate structure is preferably 1.0 to 25.0 × $10^{-2}$ g/cm$^3$, more preferably 2.0 to 20.0 × $10^{-2}$ g/cm$^3$, further preferably 3.0 to 10.0 × $10^{-2}$ g/cm$^3$, from the viewpoint of an efficient noise absorbing performance. Besides, in the present specification, the apparent density is a density calculated regarding a cavity existing inside the three-dimensional reticulate structure also as a volume of the three-dimensional reticulate structure, which is calculated by dividing a mass of the three-dimensional reticulate structure by the apparent total volume of the three-dimensional reticulate structure (a volume determined from the outer shape of the three-dimensional reticulate structure including the internal cavity). Specifically, it can be calculated by preparing a cubic measurement sample having an approximate shape of 1 m × 1 m × 1 m using the three-dimensional reticulate structure and measuring a mass of the prepared measurement sample.

A hardness at 25% compression of the three-dimensional reticulate structure is preferably 20 to 250 N, more preferably 60 to 220 N. When the hardness at 25% compression is within the above-described ranges, a good road noise reduction property can be obtained without adversely affecting sealing property, and a tire becomes less likely to be damaged when a nail or the like is stuck in the tire. Besides, in the present specification, the hardness at 25% compression of the three-dimensional reticulate structure is measured according to JIS K 6400-2 using a perfect circular pressure plate having a diameter of 200 mm.

In the three-dimensional reticulate structure, the wire is preferably a hollow fiber. Therefore, a better road noise reduction property can be obtained. A hollow ratio of the wire is preferably 10 to 90%, more preferably 20 to 80%, because it is better in sealing property and road noise reduction property. Besides, in the present specification, the hollow ratio of the wire is a value calculated using the following equation by photographing a cross section (transverse section) in a direction perpendicular to a wire axis (fiber axis) of the wire and measuring a total area of the cross section (Sa) and an area of a hollow part (Sb). However, when Sb has a plurality of hollow parts, it means a total area of respective hollow parts.

$$\text{Hollow ratio (\%)} = (Sb/Sa) \times 100$$

An average diameter (average fiber diameter) of the wire is, but not particularly limited to, preferably 0.1 to 5.0 mm, more preferably 0.3 to 2.0 mm. When the average diameter of the wire is within the above-described ranges, an effect of reducing noise can be sufficiently obtained, and a tire can be less likely to be damaged when a nail or the like is stuck in the tire. The average diameter of the wire can be measured by image analysis of scanning atomic force micrographs, image analysis of scanning electron micrographs, image analysis of transmission micrographs, analysis of X-ray scattering data, a pore electrical resistance method (Coulter principle), and the like. Besides, the diameter of the wire means an apparent diameter (including a cavity) of a cross section in a direction perpendicular to a wire axis (fiber axis) of the wire.

In the present invention, a complex elastic modulus at 30°C (30°C E*) of each rubber layer of a tread part is measured under a condition of a temperature at 30°C, an initial strain of 10%, a dynamic strain of 1%, and a frequency of 10 Hz. The tires of the present invention each differ in 30°C E* of four or more rubber layers of the tread part. A difference in complex elastic modulus at 30°C between adjacent rubber layers is, in any case, preferably 1.0 MPa or more, more preferably 1.5 MPa or more, further preferably 2.0 MPa or more. When the difference in complex elastic modulus at 30°C between adjacent rubber layers is within the above-described ranges, resonance between adjacent rubber layers can be suppressed more effectively.

In the present invention, it is preferable that the complex elastic modulus at 30°C of the four or more rubber layers decreases in order from the first layer of the tread surface toward the inside in the tire radial direction. As a result, the innermost layer of the tread turns into the softest state, and it is considered that an effect of absorbing a vibration energy in the innermost layer can be obtained, and an effect of suppressing vibration becomes easily maintained since the softest

rubber layer remains until the latter stage of abrasion.

The 30°C E* of the first layer is preferably 5.0 MPa or more, more preferably 6.0 MPa or more, further preferably 7.0 MPa or more, particularly preferably 8.0 MPa or more. Moreover, the 30°C E* of the first layer is preferably 15.0 MPa or less, more preferably 14.0 MPa or less, further preferably 13.0 MPa or less, particularly preferably 12.0 MPa or less.

The 30°C E* of the fourth layer is preferably 1.5 MPa or more, more preferably 2.0 MPa or more, further preferably 2.5 MPa or more, particularly preferably 3.0 MPa or more. Moreover, the 30°C E* of the fourth layer is preferably 10.0 MPa or less, more preferably 8.0 MPa or less, further preferably 6.0 MPa or less, particularly preferably 5.0 MPa or less.

Besides, 30°C E* of each rubber layer can be appropriately adjusted depending on types and compounding amounts of the above-described rubber component, filler, softening agent, and the like. For example, 30°C E* tends to become higher by increasing an amount of the softening agent (particularly oil), and 30°C E* tends to become lower by decreasing the amount of the softening agent.

The tire of the present invention has a tread comprising a first layer, a second layer, a third layer, and a fourth layer, and may be a pneumatic tire or a non-pneumatic tire. Moreover, it is appropriate for a racing tire, a tire for a passenger car, a tire for a large passenger car, a tire for a large SUV, or a tire for a motorcycle, and can be used as a summer tire, a winter tire, or a studless tire thereof.

The tire having a tread comprising a first layer, a second layer, and a third layer can be produced by a usual method using the above-described rubber composition for tread. That is, the tire can be produced by extruding unvulcanized rubber compositions, obtained by compounding each of the above-described components based on the rubber component as necessary, into shapes of the first layer, the second layer, the third layer, and the fourth layer with an extruder equipped with a mouthpiece having a predetermined shape, attaching them together with other tire members on a tire forming machine, and molding them by a usual method to form an unvulcanized tire, followed by heating and pressurizing this unvulcanized tire in a vulcanizing machine.

EXAMPLE

Although the present invention will be described based on Examples, it is not limited to Examples.

<Production of low-density member>

(Low-density member 1 (noise suppressing body))

As a noise suppressing body, a polyurethane-based sponge including an ether-based polyurethane sponge having the shape shown in FIG. 1 was used. The noise suppressing body has a volume of 15% of a total volume of a tire lumen, a density of $2.7 \times 10^{-2}$ g/cm$^3$, and a Tg of -50°C.

(Low-density member 2 (sealant layer))

Each component with the compounding shown in Table 1 was charged into a twin-screw kneading extruder and kneaded under a condition of a barrel temperature at 100°C and 200 rpm to prepare a sealant. A detail of each component described in Table 1 is as follows.

Butyl rubber: Butyl 268 (manufactured by Exxon Mobil Corporation, Mooney viscosity (ML1 + 8 (125°C)) = 32)
Liquid polybutene: Nisseki Polybutene HV300 (manufactured by JXTG Nippon Oil & Energy Corporation, kinematic viscosity at 40°C: 26000 mm$^2$/s, kinematic viscosity at 100°C: 590 mm$^2$/s, number average molecular weight: 1400)
Carbon black: N330 (manufactured by Cabot Japan K.K., HAF grade, DBP oil absorption: 102 mL/100 g)
Cross-linking agent: BPO (dibenzoyl peroxide manufactured by NOF CORPORATION)
Cross-linking aid: VULNOC GM (p-benzoquinone dioxime manufactured by Ouchi Shinko Chemical Industry Co., Ltd.)

Table 1

| | Sealant |
|---|---|
| Butyl rubber | 100 |
| Liquid polybutene | 200 |
| Carbon black | 50 |

(continued)

| | Sealant |
|---|---|
| Cross-linking agent | 10 |
| Cross-linking aid | 10 |
| Viscosity at 0°C (kPa·s) | 40 |
| Viscosity at 100°C (kPa·s) | 7 |

Such a sealant was used to form a sealant layer. The sealant layer was formed on the inner peripheral surface of the tire of the tread part, defining a width of the sealant layer as substantially a width of a belt layer and a thickness of the same as 3.0 mm. The sealant layer was used as a low-density member 2.

(Low-density member 3 (three-dimensional reticulate structure))

A three-dimensional reticulate structure (apparent density: $5.1 \times 10^{-2}$ g/cm$^3$) produced using velprene as a resin according to the producing method in JP 2018-90131 A was used. Using this three-dimensional reticulate structure, a noise absorbing layer having a width of 100 mm, a thickness of 80 mm, and a cross-sectional area ratio of 41% was formed on the inner peripheral surface of the tire of the tread part and used as a low-density member 3. Besides, a hollow ratio of wire forming the three-dimensional reticulate structure was 50%.

<Production of rubber composition and tire>

Various chemicals used in Examples and Comparative examples are collectively shown below.

NR: TSR20
SBR: Modified S-SBR produced in Production example 1 which will be described later (styrene content: 30% by mass, vinyl content: 52 mol%, Mw: 250,000, non-oil-extended product)
BR: Ubepol BR (Registered Trademark) 150B manufactured by Ube Industries, Ltd. (cis content: 97% by mass, Mw: 440,000)
Carbon black: Show Black N220 manufactured by Cabot Japan K.K. ($N_2SA$: 111 m$^2$/g)
Silica: Ultrasil VN3 manufactured by Evonik Degussa GmbH ($N_2SA$: 175 m$^2$/g)
Silane coupling agent: Si266 manufactured by Evonik Degussa GmbH (bis(3-triethoxysilylpropyl)disulfide)
Powdered rubber: W2-A manufactured by Muraoka Rubber Reclaiming Co., Ltd. (rubber powder: 30 mesh, polymer content: 52% by mass, carbon content: 32% by mass, average particle size: 500 μm, specific gravity: 1. 14)
Oil: VivaTec 400 manufactured by H&R Group (TDAE oil)
Zinc oxide: Zinc oxide No. 1 manufactured by Mitsui Mining & Smelting Co., Ltd.
Antioxidant: Antigen 6C manufactured by Sumitomo Chemical Co., Ltd. (N-(1,3-dimethylbutyl)-N'-phenyl-p-phenylenediamine)
Stearic acid: Bead stearic acid "CAMELLIA" manufactured by NOF CORPORATION
Wax: OZOACE 0355 manufactured by Nippon Seiro Co., Ltd.
Sulfur: HK-200-5 manufactured by Hosoi Chemical Industry Co., Ltd. (5% oil-containing powdered sulfur)
Vulcanization accelerator 1: Nocceler CZ manufactured by Ouchi Shinko Chemical Industry Co., Ltd. (N-cyclohexyl-2-benzothiazolylsulfenamide (CBS))
Vulcanization accelerator 2: Nocceler D manufactured by Ouchi Shinko Chemical Industry Co., Ltd. (1,3-diphenylguanidine (DPG))

Production Example 1: Synthesis of modified S-SBR

An autoclave reactor subjected to nitrogen purge was charged with cyclohexane, tetrahydrofuran, styrene, and 1,3-butadiene. After adjusting temperature of contents in the reactor to 20°C, n-butyllithium was added to initiate polymerization. The polymerization was performed under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a modifying agent to perform reaction. After completion of the polymerization reaction, 2,6-di-tert-butyl-p-cresol was added. Next, the mixture was subjected to removal of solvent by a steam stripping and dried by a heat roll whose temperature was adjusted to 110°C to obtain a modified S-SBR.

(Examples and Comparative examples)

According to the compounding formulations shown in Table 2, using a 1.7 L closed Banbury mixer, all chemicals other than sulfur and vulcanization accelerators were kneaded until reaching a discharge temperature at 150°C to 160°C for 1 to 10 minutes to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was molded into each shape of the first layer (thickness: 1.5 mm), the second layer (thickness: 3.5 mm), the third layer (thickness: 3.5 mm), and the fourth layer (thickness: 1.5 mm) of the tread, and attached together with other tire members, preparing an unvulcanized tire, followed by vulcanized at 170°C to obtain each test tire shown in Table 3 (size: 195/65R15, rim: 15 × 6.0J, internal pressure: 230 kPa). Besides, a groove depth (deepest part) of a circumferential groove was set to 8.0 mm.

<Measurement of complex elastic modulus E*>

For each rubber test piece produced by being cut out with length 20 mm × width 4 mm × thickness 1 mm from inside of a rubber layer of a tread part of each test tire so that a tire circumferential direction is on a long side, using EPLEXOR series manufactured by gabo Systemtechnik GmbH, a complex elastic modulus E* was measured under a condition of a temperature at 30°C, an initial strain of 10%, a dynamic strain of 1%, and a frequency of 10 Hz. Besides, a thickness direction of a sample was defined as a tire radial direction.

<Noise deterioration-suppressing performance>

Each test tire at the time of the tire being a new article and each test tire after abrasion were mounted on four wheels of an FF passenger vehicle with a displacement of 2000 cc, respectively, and actual vehicle running was performed on a test course with a dry asphalt surface. Noise felt by a test driver in the vehicle when running at 120 km/h was evaluated based on each feeling. The evaluations were performed using an integer value of 1 to 10 points, and based on evaluation criteria that the higher the score is, the better the noise performance is, a total score by 10 test drivers was calculated. For each test tire, a rate of change of a noise performance score before and after abrasion was calculated by the following equation, and a rate of change of a control tire (Comparative example 3) was converted as 100 and indicated as an index for a noise deterioration suppression after abrasion of each test tire. The higher the numerical value is, the smaller the change in noise performance before and after abrasion, indicating that the noise deterioration-suppressing performance is good.

(Rate of change of noise of control tire) = (noise performance score after abrasion of control tire) / (noise performance score at the time of target tire being new)

(Rate of change of noise of each test tire) = (noise performance score after abrasion of each test tire) / (noise performance score at the time of each test tire being new)

(Index for noise deterioration suppression of each test tire) = (rate of change of noise of each test tire) / (rate of change of noise of control tire)

Besides, each test tire after abrasion was produced by wearing away a tread part along a tread radius so that the depth of the deepest circumferential groove of the new tire is 50% of that at the time of the tire being a new article, and then thermally deteriorating this tire at 80°C for 7 days. In each test tire after abrasion, the second layer is exposed to form a tread surface

Table 2

| | Rubber layer | | | | | | | |
|---|---|---|---|---|---|---|---|---|
| | A | B | C | D | E | F | G | H |
| Compounding amount (part by mass) | | | | | | | | |
| NR | 10 | 10 | 10 | 10 | 10 | 10 | 10 | 75 |
| SBR | 70 | 70 | 70 | 70 | 70 | 70 | 70 | - |
| BR | 20 | 20 | 20 | 20 | 20 | 20 | 20 | 25 |

(continued)

| | Rubber layer | | | | | | | |
|---|---|---|---|---|---|---|---|---|
| | A | B | C | D | E | F | G | H |
| Compounding amount (part by mass) | | | | | | | | |
| Carbon black | 5 | 5 | 5 | 5 | 5 | 5 | 5 | 40 |
| Silica | 80 | 80 | 80 | 80 | 80 | 80 | 80 | - |
| Silane coupling agent | 8 | 8 | 8 | 8 | 8 | 8 | 8 | - |
| Powdered rubber | - | - | - | - | - | - | 10 | - |
| Oil | 5 | 10 | 15 | 20 | 25 | 35 | 35 | 10 |
| Zinc oxide | 3.0 | 3.0 | 3.0 | 3.0 | 3.0 | 3.0 | 3.0 | 2.0 |
| Antioxidant | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 1.5 |
| Sulfur | 1.5 | 1.5 | 1.5 | 1.5 | 1.5 | 1.5 | 1.5 | 2.0 |
| Vulcanization accelerator 1 | 1.8 | 1.8 | 1.8 | 1.8 | 1.8 | 1.8 | 1.8 | 0.5 |
| Vulcanization accelerator 2 | 2.2 | 2.2 | 2.2 | 2.2 | 2.2 | 2.2 | 2.2 | 1.5 |
| 30°C E* (MPa) | 10.0 | 9.0 | 8.0 | 7.0 | 6.0 | 4.0 | 3.5 | 4.0 |

Table 3

| | Example 1 | Example 2 | Example 3 | Example 4 | Example 5 | Example 6 | Example 7 | Example 8 | Example 9 | Example 10 | Example 11 | Comparative example 1 | Comparative example 2 | Comparative example 3 | Comparative example 4 |
|---|---|---|---|---|---|---|---|---|---|---|---|---|---|---|---|
| First layer | A | A | F | A | A | A | A | A | A | A | A | A | A | A | A |
| Second layer | B | C | E | C | C | C | C | C | C | C | C | B | B | B | B |
| Third layer | C | E | C | E | E | E | E | E | E | E | E | - | C | E | D |
| Fourth layer | D | F | A | H | G | G | F | G | G | G | G | - | - | - | - |
| 30°C E* (MPa) | | | | | | | | | | | | | | | |
| First layer | 10.0 | 10.0 | 4.0 | 10.0 | 10.0 | 10.0 | 10.0 | 10.0 | 10.0 | 10.0 | 10.0 | 10.0 | 10.0 | 10.0 | 10.0 |
| Second layer | 9.0 | 8.0 | 6.0 | 8.0 | 8.0 | 8.0 | 8.0 | 8.0 | 8.0 | 8.0 | 8.0 | 9.0 | 9.0 | 9.0 | 9.0 |
| Third layer | 8.0 | 6.0 | 8.0 | 6.0 | 6.0 | 6.0 | 6.0 | 6.0 | 6.0 | 6.0 | 6.0 | - | 8.0 | 6.0 | 7.0 |
| Fourth layer | 7.0 | 4.0 | 10.0 | 4.0 | 3.5 | 3.5 | 3.5 | 3.5 | 3.5 | 3.5 | 3.5 | - | - | - | - |
| Difference in 30°C E* between first layer and second layer (MPa) | 1.0 | 2.0 | 2.0 | 2.0 | 2.0 | 2.0 | 2.0 | 2.0 | 2.0 | 2.0 | 2.0 | 1.0 | 1.0 | 1.0 | 1.0 |
| Difference in 30°C E* between second layer and third layer (MPa) | 1.0 | 2.0 | 2.0 | 2.0 | 2.0 | 2.0 | 2.0 | 2.0 | 2.0 | 2.0 | 2.0 | - | 1.0 | 3.0 | 2.0 |
| Difference in 30°C E* between third layer and fourth layer (MPa) | 1.0 | 2.0 | 2.0 | 2.0 | 2.5 | 2.5 | 2.0 | 2.5 | 2.5 | 2.5 | 2.5 | - | - | - | - |
| Low-density member | - | - | - | - | - | 1 | 1 | 2 | 3 | - | - | - | - | - | 1 |
| Groove area ratio in center land part (%) | 27 | 27 | 27 | 27 | 27 | 27 | 27 | 27 | 27 | 30 | 27 | 27 | 27 | 27 | 30 |
| Groove area ratio in shoulder land part (%) | 30 | 30 | 30 | 30 | 30 | 30 | 30 | 30 | 30 | 27 | 30 | 30 | 30 | 30 | 27 |
| $L_{95}/L_0$ | 0.50 | 0.50 | 0.50 | 0.50 | 0.50 | 0.50 | 0.50 | 0.50 | 0.50 | 0.50 | 1.00 | 0.50 | 0.50 | 0.50 | 0.50 |
| Index for noise deterioration suppression | 105 | 114 | 114 | 114 | 119 | 129 | 124 | 129 | 129 | 114 | 110 | 86 | 95 | 100 | 100 |

From the results in Tables 2 and 3, it can be found that, in the tire of the present invention in which four or more rubber layers, each having a different complex elastic modulus, are laminated on the tread part, the noise deterioration after abrasion of the tire is remarkably suppressed.

EXPLANATION OF NUMERALS

1. Tread part
2. Sidewall
3. Bead part
4. Carcass
5. Belt
6. Band
7. Concave groove
8. Rim
9. Low-density member
10. Tread surface
11, 12, 13. Circumferential groove
15. Groove wall of circumferential groove
16. Outer shoulder land part
17. Inner shoulder land part
18. Outer center land part
19. Inner center land part
21. Shoulder lateral groove
22. Shoulder sipe
23. Center Sipe
C. Tire equator
To. Outer tread end
Ti. Inner tread end
W. Tire width direction
H. Groove bottom of circumferential groove
31. Bead core
61. Edge band
62. Full band

## Claims

**1.** A tire having a tread part (1) comprising four or more rubber layers each having a different complex elastic modulus at 30°C measured under a condition of a temperature at 30°C, an initial strain of 10%, a dynamic strain of 1%, and a frequency of 10 Hz,

wherein the tread part (1) has two or more circumferential grooves (11, 12, 13) extending continuously in a circumferential direction (C) of the tire, a pair of shoulder land parts (16, 17) partitioned by the circumferential grooves (11, 12, 13), and a center land part (18, 19) located between the pair of shoulder land parts (16, 17); **characterized in that** a groove area ratio in the shoulder land part (16, 17) is larger than a groove area ratio in the center land part (18, 19).

**2.** The tire of claim 1, wherein, in the four or more rubber layers, a difference in complex elastic modulus at 30°C between adjacent rubber layers is 1.0 MPa or more.

**3.** The tire of claim 1, wherein, in the four or more rubber layers, a difference in complex elastic modulus at 30°C between adjacent rubber layers is 2.0 MPa or more.

**4.** The tire of any one of claims 1 to 3, wherein a complex elastic modulus at 30°C of the four or more rubber layers decreases in order from a first layer of a tread surface toward inside in a tire radial direction.

5. The tire of any one of claims 1 to 4, wherein a complex elastic modulus at 30°C of the first layer of the tread surface is 5.0 MPa or more.

6. The tire of any one of claims 1 to 5, wherein, of the four or more rubber layers, a rubber layer located on the innermost side in the tire radial direction is composed of a rubber composition comprising a rubber component and a powdered rubber, and wherein a content of the powdered rubber based on 100 parts by mass of the rubber component is 10 to 80 parts by mass.

7. The tire of any one of claims 1 to 6, wherein an inner peripheral surface of the tire of the tread part (1) is provided with one or more low-density members selected from the group consisting of a sealant layer, a noise suppressing body, and a three-dimensional reticulate structure.

8. The tire of any one of claims 1 to 7, wherein a length in a width direction (W) of at least one of the land parts gradually increases from outside to inside in the tire radial direction.

9. The tire of any one of claims 1 to 8, wherein, when a groove width on the tread surface of the circumferential groove (12) located on the outermost side when mounted on a vehicle is $L_0$, and a groove width at 95% of the deepest part of the groove bottom of the circumferential groove (12) located on the outermost side when mounted on the vehicle is $L_{95}$, $L_{95}/L_0$ is 0.20 to 0.80.

**Patentansprüche**

1. Reifen mit einem Laufflächenteil (1), der vier oder mehr Gummischichten umfasst, die jeweils einen unterschiedlichen komplexen Elastizitätsmodul bei 30 °C aufweisen, gemessen unter einer Bedingung einer Temperatur von 30 °C, einer Anfangsdehnung von 10 %, einer dynamischen Dehnung von 1 % und einer Frequenz von 10 Hz,

   wobei der Laufflächenteil (1) zwei oder mehr Umfangsrillen (11, 12, 13), die sich kontinuierlich in einer Umfangsrichtung (C) des Reifens erstrecken, ein Paar Schulterlandteile (16, 17), die durch die Umfangsrillen (11, 12, 13) abgeteilt sind, und einen Mittellandteil (18, 19), der sich zwischen dem Paar Schulterlandteilen (16, 17) befindet, aufweist;
   **dadurch gekennzeichnet, dass** ein Rillenflächenverhältnis in dem Schulterlandteil (16, 17) größer als ein Rillenflächenverhältnis in dem Mittellandteil (18, 19) ist.

2. Reifen nach Anspruch 1, wobei in den vier oder mehr Gummischichten eine Differenz im komplexen Elastizitätsmodul bei 30 °C zwischen benachbarten Gummischichten 1,0 MPa oder mehr beträgt.

3. Reifen nach Anspruch 1, wobei in den vier oder mehr Gummischichten eine Differenz im komplexen Elastizitätsmodul bei 30 °C zwischen benachbarten Gummischichten 2,0 MPa oder mehr beträgt.

4. Reifen nach einem der Ansprüche 1 bis 3, wobei ein komplexer Elastizitätsmodul bei 30 °C der vier oder mehr Gummischichten in der Reihenfolge von einer ersten Schicht einer Laufflächenoberfläche zur Innenseite in einer Reifenradialrichtung hin abnimmt.

5. Reifen nach einem der Ansprüche 1 bis 4, wobei ein komplexer Elastizitätsmodul bei 30 °C der ersten Schicht der Laufflächenoberfläche 5,0 MPa oder mehr beträgt.

6. Reifen nach einem der Ansprüche 1 bis 5, wobei von den vier oder mehr Gummischichten eine Gummischicht, die sich auf der innersten Seite in der Reifenradialrichtung befindet, aus einer Kautschukmischung besteht, die eine Kautschukkomponente und einen pulverförmigen Kautschuk umfasst, und wobei ein Gehalt des pulverförmigen Kautschuks, bezogen auf 100 Massenteile der Kautschukkomponente, 10 bis 80 Massenteile beträgt.

7. Reifen nach einem der Ansprüche 1 bis 6, wobei eine Innenumfangsfläche des Reifens des Laufflächenteils (1) mit einem oder mehreren Elementen niedriger Dichte versehen ist, die aus der Gruppe ausgewählt sind, die aus einer Dichtungsmittelschicht, einem Geräuschunterdrückungskörper und einer dreidimensionalen netzartigen Struktur besteht.

8. Reifen nach einem der Ansprüche 1 bis 7, wobei eine Länge in einer Breitenrichtung (W) von mindestens einem der

Landteile von außen nach innen in der Reifenradialrichtung allmählich zunimmt.

**9.** Reifen nach einem der Ansprüche 1 bis 8, wobei, wenn eine Rillenbreite auf der Laufflächenoberfläche der Umfangsrille (12), die sich auf der äußersten Seite befindet, wenn er an einem Fahrzeug aufgezogen ist, $L_0$ beträgt, und eine Rillenbreite bei 95 % des tiefsten Teils des Rillenbodens der Umfangsrille (12), die sich auf der äußersten Seite befindet, wenn er an dem Fahrzeug aufgezogen ist, $L_{95}$ beträgt, $L_{95}/L_0$ 0,20 bis 0,80 beträgt.

**Revendications**

**1.** Pneumatique ayant une partie de bande de roulement (1) comprenant quatre ou plus couches de caoutchouc chacune ayant un module élastique complexe différent à 30 °C mesuré sous une condition d'une température à 30 °C, une contrainte initiale de 10 %, une contrainte dynamique de 1 % et une fréquence de 10 Hz,

dans lequel la partie de bande roulement (1) a deux ou plus de deux rainures circonférentielles (11, 12, 13) s'étendant en continu dans une direction circonférentielle (C) du pneumatique, une paire de parties d'appui d'épaulement (16, 17) partitionnées par les rainures circonférentielles (11, 12, 13) et une partie d'appui centrale (18, 19) située entre la paire de parties d'appui d'épaulement (16, 17) ;
**caractérisé en ce qu'**un rapport de surface de rainure dans la partie d'appui d'épaulement (16, 17) est plus grand qu'un rapport de surface de rainure dans la partie d'appui centrale (18, 19).

**2.** Pneumatique selon la revendication 1, dans lequel, dans les quatre ou plus couches de caoutchouc, une différence dans le module élastique complexe à 30 °C entre des couches de caoutchouc adjacentes est de 1,0 MPa ou plus.

**3.** Pneumatique selon la revendication 1, dans lequel, dans les quatre ou plus couches de caoutchouc, une différence dans le module élastique complexe à 30 °C entre des couches de caoutchouc adjacentes est de 2,0 MPa ou plus.

**4.** Pneumatique selon l'une quelconque des revendications 1 à 3, dans lequel un module élastique complexe à 30 °C des quatre ou plus couches de caoutchouc diminue dans l'ordre d'une première couche d'une surface de bande de roulement vers l'intérieur dans une direction radiale de pneumatique.

**5.** Pneumatique selon l'une quelconque des revendications 1 à 4, dans lequel un module élastique complexe à 30 °C de la première couche de la surface de bande de roulement est de 5,0 MPa ou plus.

**6.** Pneumatique selon l'une quelconque des revendications 1 à 5, dans lequel, des quatre ou plus couches de caoutchouc, une couche de caoutchouc située sur le côté le plus interne dans la direction radiale de pneumatique est composée d'une composition de caoutchouc comprenant un composant de caoutchouc et un caoutchouc en poudre et dans lequel une teneur du caoutchouc en poudre sur la base de 100 parties en masse du composant de caoutchouc est de 10 à 80 parties en masse.

**7.** Pneumatique selon l'une quelconque des revendications 1 à 6, dans lequel une surface périphérique interne du pneumatique de la bande de roulement (1) est fourni avec un ou plusieurs éléments de faible densité choisis dans le groupe constitué par une couche d'élément de scellement, un corps supprimant le bruit, et une structure réticulaire tri-dimensionnelle.

**8.** Pneumatique selon l'une quelconque des revendications 1 à 7, dans lequel une longueur dans une direction de largeur (W) d'au moins une des parties d'appui augmente graduellement de l'extérieur à l'intérieur dans la direction radiale de pneumatique.

**9.** Pneumatique selon l'une quelconque des revendications 1 à 8, dans lequel, lorsqu'une largeur de rainure sur la surface de bande de roulement de la rainure circonférentielle (12) située sur le côté le plus externe lorsqu'elle est montée sur un véhicule est $L_0$ et qu'une largeur de rainure à 95 % de la partie la plus profonde de la partie inférieure de rainure de la rainure circonférentielle (12) située sur le côté le plus externe lorsqu'elle est monteé sur le véhicule est $L_{95}$, $L_{95}/L_0$ est de 0,20 à 0,80.

FIG. 1

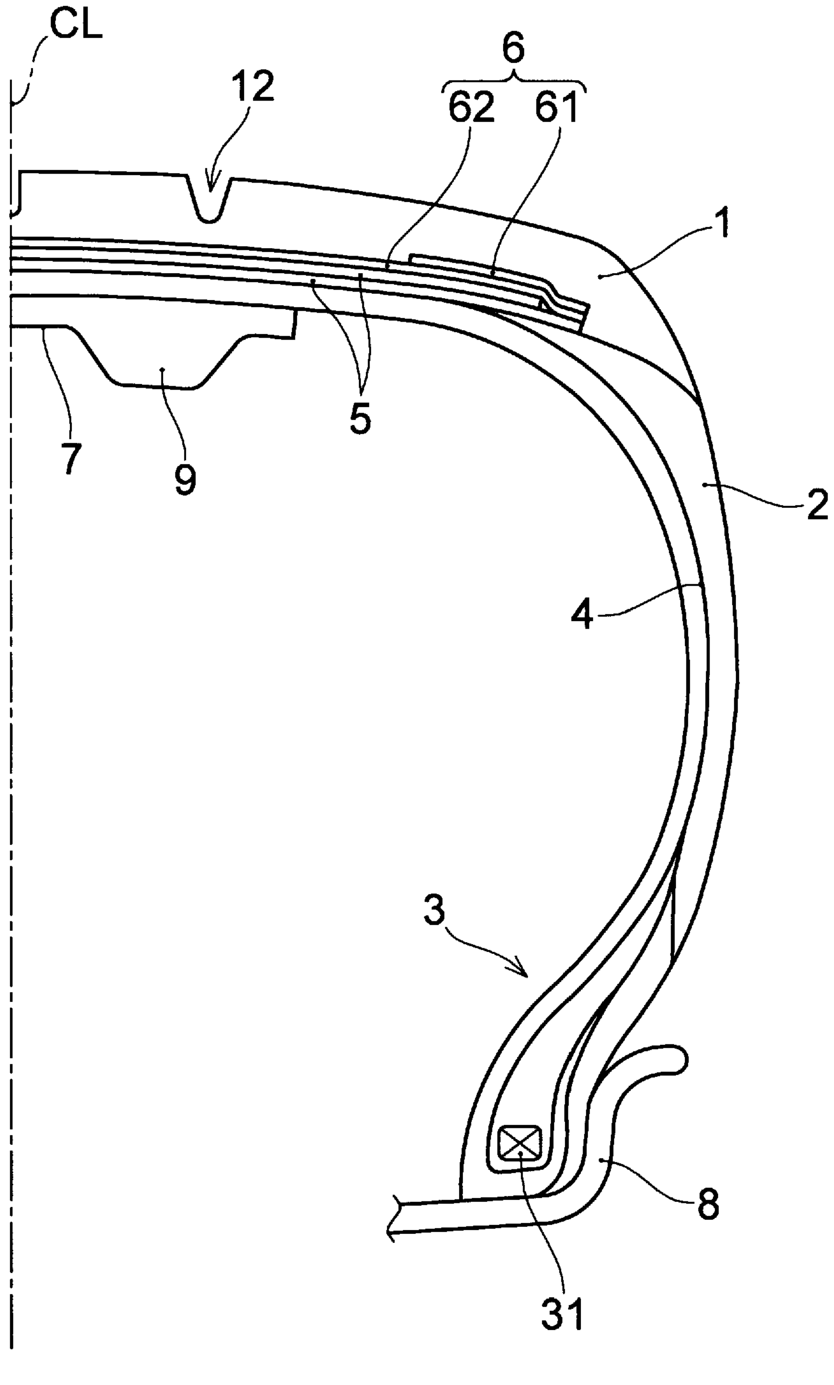

FIG. 2

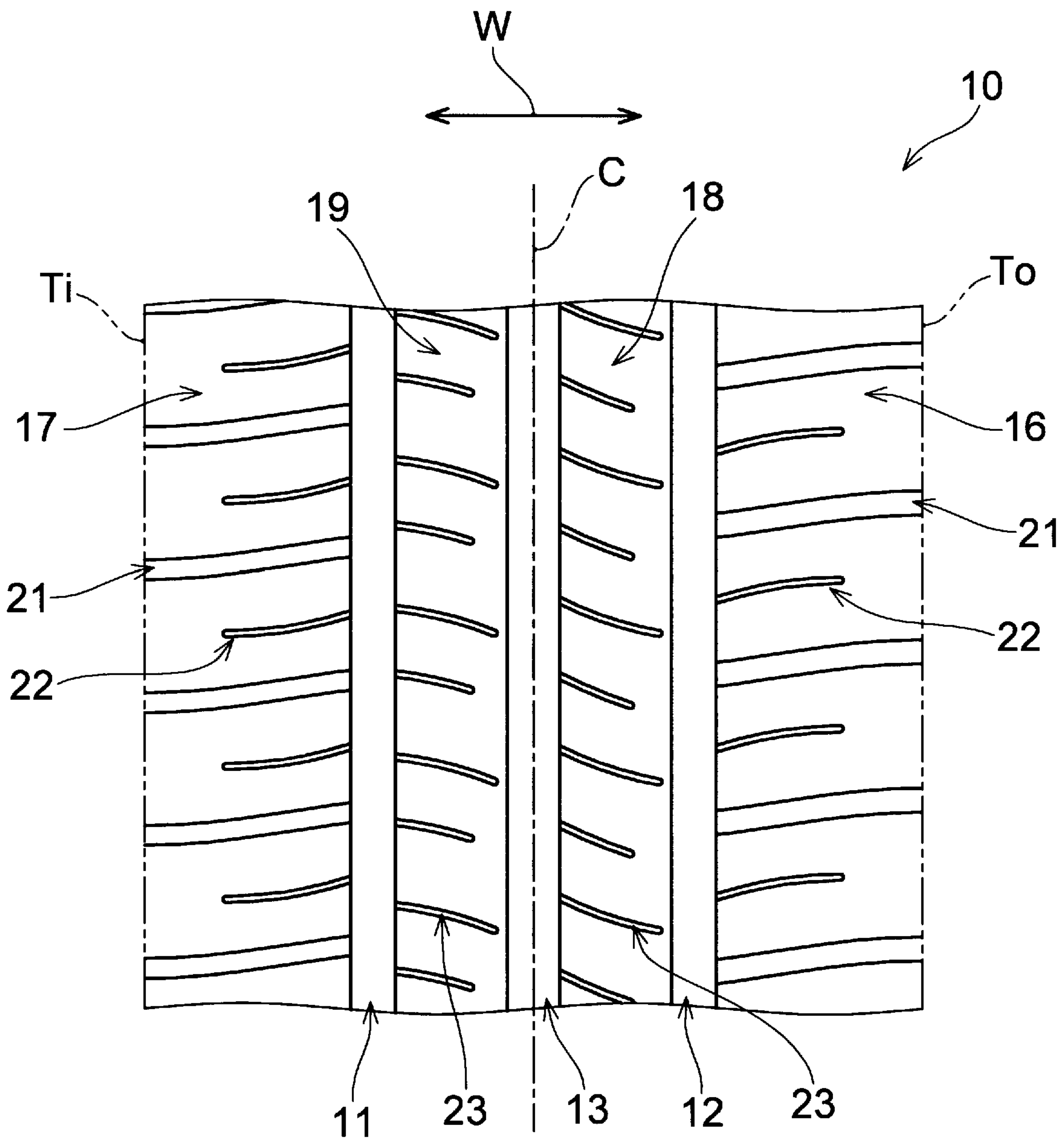

FIG. 3

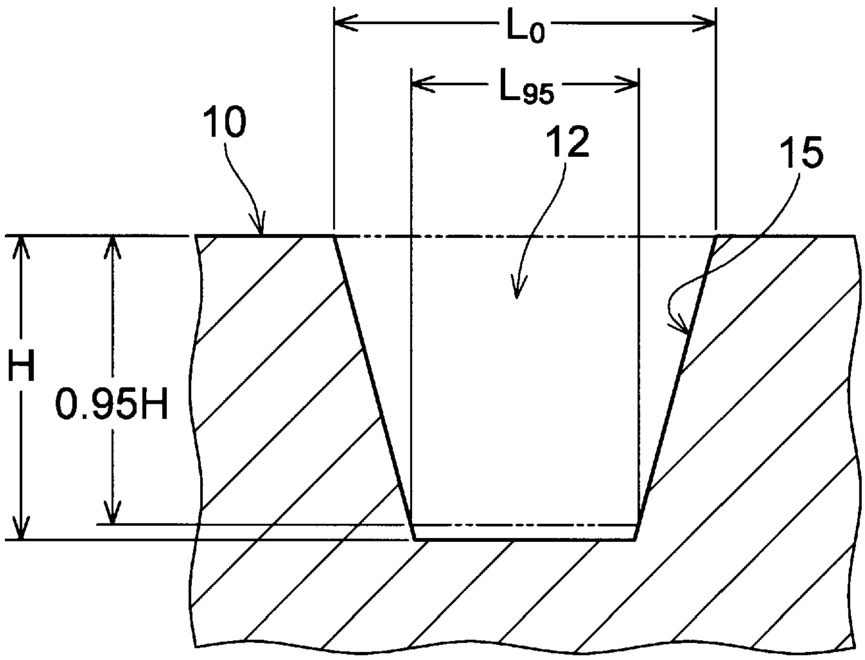

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H06156016 A
- EP 0715974 A1
- EP 0105822 A2
- EP 3115227 A1
- JP 2020023152 A
- JP 2019142503 A
- JP 2018090131 A